# EUROPÄISCHE PATENTSCHRIFT

(11) **EP 0 846 906 B1**
(45) Veröffentlichungstag und Bekanntmachung des Hinweises auf die Patenterteilung: **25.07.2001**
(21) Anmeldenummer: 97120684.2
(22) Anmeldetag: 26.11.1997
(51) Int. Cl.: F16L 33/02, F16B 2/08

(54) **Einteilige Flachbandschelle**
One-piece flat band clamp
Collier de serrage plat en une pièce

(30) Priorität: 06.12.1996 DE 19650674
(43) Veröffentlichungstag der Anmeldung: 10.06.1998
(73) Patentinhaber: Rasmussen GmbH, D-63477 Maintal (DE)
(72) Erfinder: Geppert, Helmut, 63791 Karlstein (DE)
(74) Vertreter: Knoblauch, Andreas, Dr.-Ing.

(56) Entgegenhaltungen:
- EP-A- 0 636 826
- FR-A- 2 470 275
- FR-A- 2 683 869
- US-A- 4 430 775
- US-A- 4 713 863
- US-A- 5 261 145

## Beschreibung

Die Erfindung bezieht sich auf eine einteilige Flachbandschelle mit einem Schellenband, das an beiden Enden etwa radial nach außen stehende Spannwände aufweist, und mit einem durch Gegeneinanderdrücken der beiden Spannwände zu betätigenden Schnappverschluß, der durch einen mit dem äußeren Ende der ersten Spannwand verbundenen Rasthaken und durch ein Widerlager nahe dem freien Ende eines etwa rechtwinklig an dem äußeren Ende der zweiten Spannwand abgebogenen Steges gebildet ist, wobei der Resthaken eine geringere Breite als die Schelle hat und in der Schließstellung des Schnappverschlusses in einen Ausschnitt des Steges greift.

Bei einer bekannten Flachbandschelle (EP-B-0 003 192) bildet die Stirnfläche eines um etwa 160° zurückgebogenen und bis etwa zur halben Höhe der zweiten Spannwand reichenden Endabschnitts des Steges das Widerlager für den Rasthaken. Wählt man die Ruhestellung des Widerlagers so, daß sich nur eine geringe radiale Überdeckung mit der ersten Spannwand ergibt, steht der Steg verhältnismäßig weit nach außen vor, was die Gefahr eines versehentlichen Öffnens des Schnappverschlusses mit sich bringt. Ist stattdessen eine große radiale Überlappung vorgesehen, bedarf es einer erheblichen radialen Auslenkung des Steges, um den Schnappverschluß einrasten zu lassen.

Eine Flachbandschelle der eingangs beschriebenen Art ist aus der FR-A-2 683 869 oder der US-A-5 261 145 bekannt. Bei diesen Konstruktionen wird das Widerlager durch eine Kante des Ausschnitts am Steg gebildet. Es befindet sich daher in Höhe des Steges. Dies ergibt eine geringe radiale Ausdehnung der aus der zweiten radialen Wand und dem Steg gebildeten Spannbacke. Der Steg wird im Spannzustand im wesentlichen nur von Zugkräften belastet. Ferner ist der Rasthaken nicht nur in radialer Richtung der Schelle, sondern auch in ihrer Axialrichtung gegen eine Verschiebung gesichert. Bei der Konstruktion nach der FR-A-2683869 ist die den Rasthaken aufweisende Spannbacke am einen Ende des Spannbands als ganzes radial nach außen als etwa vierkantiger Vorsprung aus dem Schellenband herausgedrückt und der Rasthaken radial nach innen am Ende des radial äußeren Bodens der zweiten Spannbacke umgebogen. Diese Art der Ausbildung der zweiten Spannbacke ist zwar weitgehend formstabil, erfordert jedoch hohe Verformungskräfte bei der Herstellung. Der durch die Spannkraft auf Biegung beanspruchte Rasthaken ist dagegen weniger formstabil und behindert das Spannen mittels eines Werkzeugs nach Art einer Kneifzange, da sich der Rasthaken nur mit hoher Kraft auf den Steg hochziehen und in den Ausschnitt einrasten läßt. Bei der Konstruktion nach der US-A 5 261 145 ist der Rasthaken auf der Oberseite eines am Ende der ersten Spannwand etwa im rechten Winkel umgebogenen zweiten Steges ausgebildet. Diese Art der Ausbildung des Rasthakens ist aufwendig. Er muß entweder am zweiten Steg angeschweißt oder aus dessen Material ausgestanzt und umgebogen werden (vgl. US-A-4 713 863, Fig. 3). Er ist ferner axial dünnwandig, so daß beim Öffnen der Schelle die Gefahr einer Verletzung des Monteurs besteht. Sodann sind die erste Spannwand und der Steg nicht hinreichend formstabil gegen die Biegungsbeanspruchung beim Spannen der Flachbandschelle.

Bei den zuletzt genannten Konstruktionen befindet sich der Haken ferner in Umfangsrichtung der Flachbandschelle in einem größeren Abstand von der ersten Spannwand. Der Abstand zwischen der ersten und der zweiten Spannwand ist daher verhältnismäßig groß. Dementsprechend ist auch der durch die Flachbandschelle nicht radial eingespannte Umfangsabschnitt eines durch die Flachbandschelle eingespannten Schlauches verhältnismäßig breit, so daß in diesem Umfangsabschnitt die Gefahr einer Undichtigkeit zwischen dem Schlauch und einem Rohrstutzen besteht, auf dem der Schlauch mittels der Flachbandschelle befestigt wird.

Die vorstehend beschriebenen Flachbandschellen ermöglichen ferner keine sogenannte Vormontage, bevor sie gespannt werden, wie dies prinzipiell aus der EP-A-0 636 826 bei einer Profilschelle bekannt ist.

Der Erfindung liegt die Aufgabe zugrunde, eine Schelle der eingangs beschriebenen Art anzugeben, die sich bei gegebenen Außenabmessungen einfach montieren läßt.

Diese Aufgabe wird erfindungsgemäß dadurch gelöst, daß der Rasthaken am radial äußeren Ende der ersten Spannwand vorgesehen ist, daß die erste Spannwand und der Rasthaken doppelwandig ausgebildet sind und ihre beiden Wände aneinander anliegen, daß der Schnappverschluß eine der Schließstellung vorgeschaltete Arretierstellung besitzt, in der die Spannwände einen größeren Abstand voneinander haben als in der Schließstellung und daß das freie Ende des Steges durch einen Widerhaken gebildet ist, der in der Arretierstellung mit dem Rasthaken zusammenwirkt.

Bei dieser Ausbildung ergibt sich ein radial verhältnismäßig kurzer Rasthaken, der aufgrund seiner Doppelwandigkeit biegesteif ist. Der Rasthaken hat einen geringeren Abstand zur zweiten Spannwand, so daß der durch das Schellenband nicht unmittelbar radial eingespannte Umfangsabschnitt eines mittels der Flachbandschelle eingespannten Schlauches entsprechend kürzer ist. Auch die gesamte erste Spannwand ist aufgrund ihrer Doppelwandigkeit verhältnismäßig biegesteif. Sodann hat ein Monteur aufgrund der vorgeschalteten Arretierstellung die Möglichkeit, zwei Bauteile zunächst lose miteinander zu verbinden, in die richtige Lage zu bringen und dann endgültig miteinander zu verbinden. Da der Widerhaken nur mit dem Rasthaken zusammenwirkt, bleibt die erste Spannwand hinreichend frei, um ein Spannwerkzeug nach Art einer Kneifzange, ungehindert durch den Widerhaken, an der ersten Spannwand angreifen zu lassen.

Günstig ist es ferner, wenn der zwischen der ersten Spannwand und dem angrenzenden Teil des Schellenbandes gebildete Winkel und der zwischen der zweiten Spannwand und dem angrenzenden Teil des Steges gebildete Winkel durch Verformungen des Schellenbandmaterials versteift sind. Die radiale Länge des Rasthakens kann klein gehalten werden, da eine Verformung der ihn tragenden Spannwand durch die getroffenen Versteifungsmaßnahmen weitgehend vermieden ist.

Es empfiehlt sich, dem Ausschnitt eine das Einführen des Rasthakens erleichternde Schrägfläche vorzuschalten.

Ferner ist es günstig, wenn der Rasthaken als leicht abgewinkelte Lasche ausgebildet ist. Es genügen dann noch geringere Kräfte, mit denen die beiden Spannwände zusammengedrückt werden, um den Schnappverschluß einrasten zu lassen.

Hierbei ist es empfehlenswert, daß dem Rasthaken ein Anschlag für den Steg in seiner Raststellung benachbart ist. Aufgrund seiner Vorspannung hat der Steg im Spannzustand eine genau definierte Lage. Daher sind die in der Spannstellung auftretenden Spannkräfte ziemlich genau durch die Abmessungen der Flachbandschelle definiert.

Bei einer bevorzugten Ausführungsform ist dafür gesorgt, daß das Schellenband flach und mit einer Verlängerung versehen ist, die mit einer 180°-Biegung am äußeren Ende der ersten Spannwand beginnt und sich mit einer Biegung um etwa 90° in Höhe des Spannwandfußes als den Raum zwischen den Spannwänden untergreifender Brückenabschnitt fortsetzt, und daß der Rasthaken durch den in seiner Breite beschnittenen doppelwandigen Endabschnitt der ersten Spannwand gebildet ist. Dies macht es möglich, auch bei Schlauchschellen o. dgl., deren erste Spannwand doppelwandig ist, die eingangs genannten Vorteile zu erzielen.

Auch hierbei ist es empfehlenswert, die erste Spannwand gut zu versteifen. Dies geschieht insbesondere dadurch, daß der zwischen der ersten Spannwand und dem angrenzenden Teil des Schellenbandes gebildete Winkel durch eine Sicke versteift ist, und/oder daß der zwischen dem der Spannwand parallelen Teil der Verlängerung und dem angrenzenden Teil des Brückenabschnitts gebildete Winkel durch eine Sicke versteift ist.

Vorzugsweise untergreift der Brückenabschnitt eine Ausgleichswelle am anderen Schellenbandende. Diese Ausgleichswelle dient ebenfalls dem Toleranzausgleich.

Mit Vorteil weist das flache Schellenband mindestens zwei Schnappverschlüsse nebeneinander auf. Man kann daher auch sogenannte Breitbandschellen mit Schnappverschlüssen spannen.

Vorzugsweise ist ferner dafür gesorgt, daß der Widerhaken über die Oberseite des Steges hinaus und bis in Höhe der Unterseite des Steges zurückgebogen ist. Diese Ausbildung des Widerhakens erleichtert besonders das Verrasten des Widerhakens mit dem Rasthaken, ohne dabei durch ein Spannwerkzeug, wie eine herkömmliche Kneifzange, behindert zu werden.

In der Zeichnung werden Ausführungsbeispiele der Flachbandschelle näher erläutert. Es zeigen:
- Fig. 1: die Ansicht einer Schlauchschelle ohne Vormontagemöglichkeit im Schließzustand,
- Fig. 2: in räumlicher Darstellung die erste Spannwand der Schlauchschelle nach Fig. 1,
- Fig. 3: eine vergrößerte Darstellung des Schnappverschlusses bei der Schlauchschelle der Fig. 1 und 2,
- Fig. 4: eine Draufsicht auf die Schlauchschelle der Fig. 1,
- Fig. 5: eine Draufsicht auf eine Breitbandschelle ohne Vormontagemöglichkeit,
- Fig. 6: die Ansicht einer Breitbandschelle gemäß der Erfindung in der Arretierstellung und
- Fig. 7: die Ansicht der Breitbandschelle der Fig. 6 im Schließzustand.

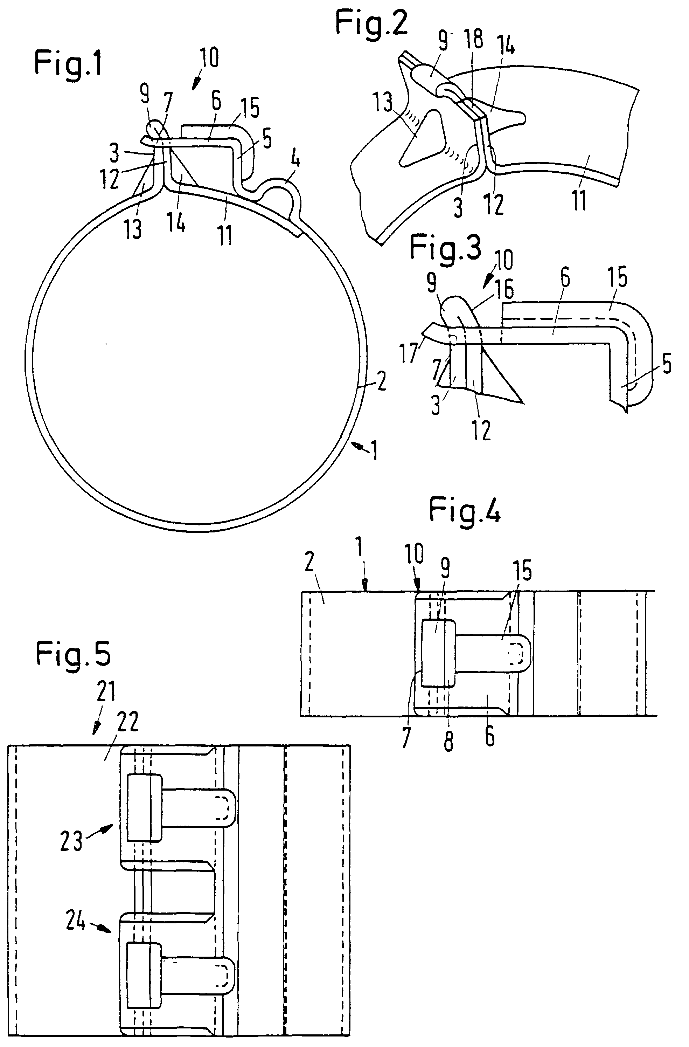

In den Fig. 1 bis 4 ist eine Flachbandschelle 1 veranschaulicht, die dazu dient, einen Elastomerschlauch auf einem Rohrstutzen festzuspannen. Ihr flaches Schellenband 2 trägt an einem Ende eine etwa radial vorstehende erste Spannwand 3 und am anderen Ende eine Welle 4 und eine etwa radial vorstehende zweite Spannwand 5. Die zweite Spannwand 5 weist am Ende eines etwa rechtwinklig abgebogenen Steges 6 ein Widerlager 7 in der Form einer Kante eines Ausschnitts 8 auf, in den ein Rasthaken 9 am freien Ende der ersten Spannwand 3 einzugreifen vermag, so daß sich ein Schnappverschluß 10 ergibt. Ein Brückenabschnitt 11 untergreift die Welle 4 und den Zwischenraum zwischen den beiden Spannwänden 3 und 5. Dieser Brückenabschnitt 11 wird durch eine Verlängerung des Schellenbandes 2 gebildet. Zu diesem Zweck ist ein Verbindungsabschnitt 12 über eine 180°-Biegung mit der Spannwand 3 und über eine 90°-Biegung am Spannwandfuß mit dem Brückenabschnitt 11 verbunden. Zur Bildung des Rasthakens 9 sind an der 180°-Biegung beidseitig Materialteile weggeschnitten, so daß der Rasthaken eine geringere Breite als der Steg 6 hat und in den Ausschnitt 8 eingreifen kann. Eine Sicke 13 versteift den Winkel zwischen dem Schellenband 2 und der ersten Spannwand 3. Eine Sicke 14 versteift den Winkel zwischen dem Verbindungsabschnitt 12 und dem Brückenabschnitt 11. Eine Sicke 15 versteift den Winkel zwischen der zweiten Spannwand 5 und dem Steg 6. Zur weiteren Versteifung des Steges 6 sind dessen Außenkanten leicht hochgestellt (Fig. 4).

Der Rasthaken 9 ist leicht abgebogen, so daß sich eine Schrägfläche 16 ergibt. Der Steg 6 ist am freien Ende etwas abgebogen, so daß sich eine Schrägfläche 17 ergibt. In der Anlieferstellung haben die Spannwände 3 und 5 einen größeren Abstand voneinander als in der Schließstellung der Fig. 1. Durch Gegeneinanderdrücken der Spannwände 3 und 5 durch ein an diesen Spannwänden eingreifendes Werkzeug kommen die Schrägflächen 16 und 17 aneinander zur Anlage. Der Steg gleitet unter gleichzeitigem Zusammendrücken des festzuspannenden Schlauches über den Rasthaken 9 hinweg, bis der Schnappverschluß einrastet. Durch das Wegschneiden des Materials ergibt sich ein Anschlag 18, der die Endstellung des Steges 6 definiert, so daß sich eindeutige Verhältnisse ergeben.

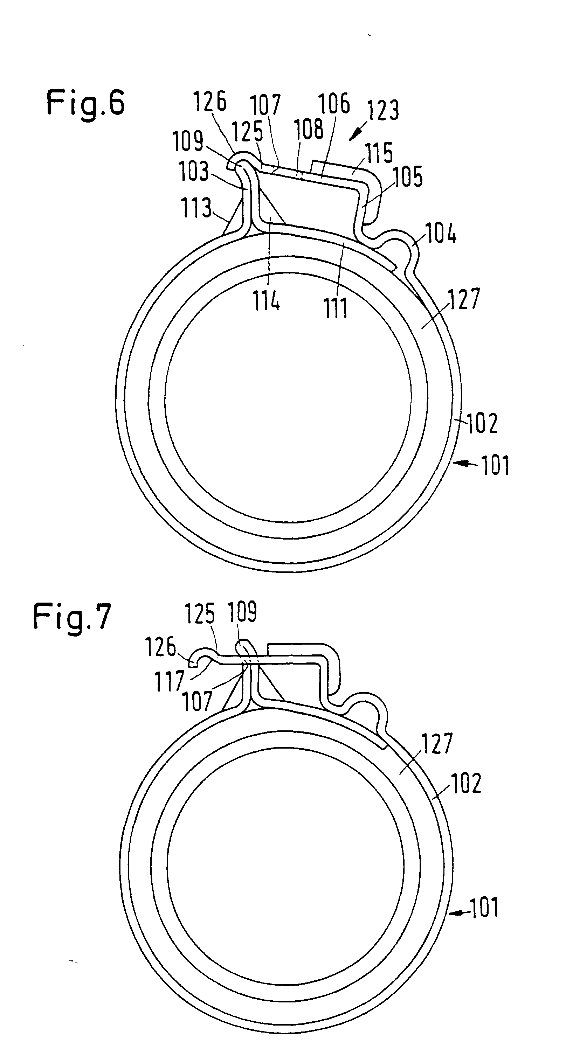

Fig. 5 zeigt eine Breitbandschelle 21 mit einem breiteren Schellenband 22. Wegen dieser Breite sind zwei Schnappverschlüsse 23 und 24 vorgesehen. Diese können die gleiche Form haben wie in dem Ausführungsbeispiel der Fig. 1 bis 4. Eine solche Breitbandschelle kann beispielsweise in Verbindung mit einer Gummimuffe zum Abdichten von Entwässerungsrohren dienen.

Bei der Breitbandschelle nach der Erfindung, entsprechend den Fig. 6 und 7, werden für funktionsgleiche Teile um 100 erhöhte Bezugszeichen verwendet. Ein wesentlicher Unterschied besteht darin, daß der Steg 106 nicht nur den Ausschnitt 108 mit der das Widerlager 107 bildenden Kante aufweist, sondern am freien Ende einen Fortsatz 125 mit einem radial nach innen gerichteten Widerhaken 126 trägt. Der Fortsatz weist eine Schrägfläche 117 auf, die das Einführen des Rasthakens 109 in den Ausschnitt 108 erleichtert. Der Rasthaken 109 kann außerdem mit dem Widerhaken 126 in Eingriff treten, so daß sich eine Arretierstellung ergibt, in der die Schelle teilweise, aber noch nicht vollständig gespannt ist.

Die Schelle der Fig. 6 und 7 dient als Rohrverbindungsschelle und umschließt eine Gummimuffe 127. In der Arretierstellung der Fig. 6 wird die Gummimuffe 127 mittels Reibschluß in der Schelle 101 gehalten. Der Monteur kann nun die Schelle auf die beiden zu verbindenden Rohrenden aufstecken und anschließend die Rohrleitung ausrichten. Im zweiten Arbeitsgang wird dann die Schelle mittels Zange in den Endzustand gebracht, in der die Schelle durch den Schnappverschluß 123 verriegelt ist und sich eine dichte Verbindung ergibt.

Bei allen Ausführungsbeispielen besteht die gesamte Schelle einschließlich des Schnappverschlusses aus einem einzigen Stück Bandmaterial, das - wenn erforderlich - auch ein hitzebeständiger oder korrosionsgeschützter Werkstoff sein kann. Die Verriegelung, also das Spannen, erfolgt mit einer Zange, die an den Spannwänden angreift und manuell oder pneumatisch betätigt sein kann. Die Spannkraft im Endzustand ist durch die Abmessungen der Schelle ziemlich genau definiert. Fehler durch eine zu geringe oder zu hohe Spannkraft können bei richtiger Auslegung der Schelle nicht auftreten.

## Patentansprüche

1. Einteilige Flachbandschelle (101) mit einem Schellenband (102), das an beiden Enden etwa radial nach außen stehende Spannwände (103,105) aufweist, und mit einem durch Gegeneinanderdrücken der beiden Spannwände zu betätigenden Schnappverschluß, der durch einen mit dem äußeren Ende der ersten Spannwand (103) verbundenen Rasthaken (109) und durch ein Widerlager nahe dem freien Ende eines etwa rechtwinklig an dem äußeren Ende der zweiten Spannwand (105) abgebogenen Steges (106) gebildet ist, wobei der Rasthaken (109) eine geringere Breite als die Schelle (101) hat und in der Schließstellung des Schnappverschlusses (123) in einen Ausschnitt (108) des Steges (106) greift, dadurch gekennzeichnet, daß der Rasthaken (109) am radial äußeren Ende der ersten Spannwand (103) vorgesehen ist, daß die erste Spannwand (103) und der Rasthaken (109) doppelwandig ausgebildet sind und ihre beiden Wände aneinander anliegen, daß der Schnappverschluß (123) eine der Schließstellung vorgeschaltete Arretierstellung besitzt, in der die Spannwände (103,105) einen größeren Abstand voneinander haben als in der Schließstellung und daß das freie Ende des Steges (106) durch einen Widerhaken (126) gebildet ist, der in der Arretierstellung mit dem Rasthaken (109) zusammenwirkt.

2. Schelle nach Anspruch 1, dadurch gekennzeichnet, daß der zwischen der ersten Spannwand (103) und dem angrenzenden Teil des Schellenbandes (102) gebildete Winkel und der zwischen der zweiten Spannwand (105) und dem angrenzenden Teil des Steges (106) gebildete Winkel durch Verformungen des Schellenbandmaterials versteift sind.

3. Schelle nach Anspruch 1 oder 2, dadurch gekennzeichnet, daß dem Ausschnitt (108) eine das Einführen des Rasthakens (109) erleichternde Schrägfläche (117) vorgeschaltet ist.

4. Schelle nach einem der Ansprüche 1 bis 3, dadurch gekennzeichnet, daß der Rasthaken (109) als leicht abgewinkelte Lasche ausgebildet ist.

5. Schelle nach einem der Ansprüche 1 bis 4, dadurch gekennzeichnet, daß dem Rasthaken (109) ein Anschlag für den Steg (106) in seiner Raststellung benachbart ist.

6. Schelle nach einem der Ansprüche 1 bis 5, dadurch gekennzeichnet, daß das Schellenband (102) mit einer Verlängerung versehen ist, die mit einer 180°-Biegung am äußeren Ende der ersten Spannwand (103) beginnt und sich mit einer Biegung um etwa 90° in Höhe des Spannwandfußes als den Raum zwischen den Spannwänden (103, 105) untergreifender Brükenabschnitt (11; 111) fortsetzt, und daß der Rasthaken (109) durch den in seiner Breite beschnittenen doppelwandigen Endabschnitt der ersten Spannwand (203) gebildet ist.

7. Schelle nach Anspruch 6, dadurch gekennzeichnet, daß der zwischen der ersten Spannwand (103) und dem angrenzenden Teil des Schellenbandes (102) gebildete Winkel durch eine Sicke (113) versteift ist.

8. Schelle nach Anspruch 6 oder 7, dadurch gekennzeichnet, daß der zwischen dem der Spannwand (103) parallelen Teil der Verlängerung und dem angrenzenden Teil des Brückenabschnitts (111) gebildete Winkel durch eine Sicke (114) versteift ist.

9. Schelle nach einem der Ansprüche 6 bis 8, dadurch gekennzeichnet, daß der Brückenabschnitt (111) eine Ausgleichswelle (104) am anderen Schellenbandende untergreift.

10. Schelle nach einem der Ansprüche 1 bis 9, dadurch gekennzeichnet, daß das flache Schellenband (22) mindestens zwei Schnappverschlüsse (23, 24) nebeneinander aufweist.

11. Schelle nach einem der Ansprüche 1 bis 10, dadurch gekennzeichnet, daß der Widerhaken (126) über die Oberseite des Steges (106) hinaus und bis in Höhe der Unterseite des Steges (106) zurückgebogen ist.

## Claims

1. A one-piece flat band clip (101) comprising a clip band (102 which at both ends has substantially radially outwardly extending clamping walls (103, 105), and a snap fastener which is to be actuated by pressing the two clamping walls towards each other and which is formed by a retaining hook (109) connected to the outer end of the first clamping wall (103) and by an abutment near the free end of a leg (106) which is bent over substantially at a right angle at the outer end of the second clamping wall (105) wherein the retaining hook (109) is of a smaller width than the clip (101) and in the closed position of the snap fastener (123) engages into a cut-out (108) in the leg (106), characterised in that the retaining hook (109) is provided at the radially outer end of the first clamping wal (103), that the first clamping wall (103) and the retaining hook (109) are of a double-wall structure and the two walls thereof bear against each other, that the snap fastener (123) has an arresting position which is disposed in front of the closed position and in which the clamping walls (103, 105) are at a greater spacing from each other than in the closed position, and that the free end of the leg (106) is formed by a counterpart hook (126) which in the arresting position co-operates with the retaining hook (109).

2. A clip according to claim 1 characterised in that the angle formed between the first clamping wall (103) and the adjoining part of the clip band (102) and the angle formed between the second clamping wall (105) and the adjoining part of the leg (106) are stiffened by deformations of the clip band material.

3. A clip according to claim 1 or claim 2 characterised in that disposed in front of the cut-out (108) is an inclined surface (117) for facilitating introduction of the retaining hook (109).

4. A clip according to one of claims 1 to 3 characterised in that the retaining hook (109) is in the form of a slightly angled tongue.

5. A clip according to one of claims 1 to 4 characterised in that an abutment for the leg (106) in its retaining position is adjacent to the retaining hook (109).

6. A clip according to one of claims 1 to 5 characterised in that the clip band (102) is provided with an extension portion which begins with a 180° bend at the outer end of the first clamping wall (103) and which continues with a bend through about 90° at the level of the base of the clamping wall as a bridge portion (11; 111) which engages under the space between the clamping walls (103, 105), and that the retaining hook (109) is formed by the double-walled end portion of the first clamping wall (103), said end portion being trimmed in respect of its width.

7. A clip according to claim 6 characterised in that the angle formed between the first clamping wall (103) and the adjoining part of the clip band (102) is stiffened by a bead (113).

8. A clip according to claim 6 or claim 7 characterised in that the angle formed between the part of the extension portion, which is parallel to the clamping wall (103), and the adjoining part of the bridge portion (111) is stiffened by a bead (114).

9. A clip according to one of claims 6 to 8 characterised in that the bridge portion (111) engages under a compensating wave configuration (104) at the other end of the clip band.

10. A clip according to one of claims 1 to 9 characterised in that the flat clip band (22) has at least two snap fasteners (23, 24) in mutually juxtaposed relationship.

11. A clip according to one of claims 1 to 10 characterised in that the counterpart hook (126) is bent beyond the top side of the leg (106) and back to the level of the underside of the leg (106).

## Revendications

1. Collier en ruban plat (101) en une seule pièce, comportant un ruban de collier (102) qui présente aux deux extrémités des parois de serrage (103, 105) en saillie approximativement radialement vers l'extérieur, et une fermeture à encliquetage à actionner par pressage des parois de serrage l'une contre l'autre, laquelle est formée par un crochet d'enclenchement (109) relié à l'extrémité extérieure de la première paroi de serrage (103) et par une contrebutée à proximité de l'extrémité libre d'une barrette (106) recourbée approximativement à angle droit à l'extrémité extérieure de la seconde paroi de serrage (105), le crochet d'enclenchement (109) présentant une largeur inférieure à celle du collier (101) et s'engageant dans une entaille (108) de la barrette (106) dans la position fermée de la fermeture à encliquetage (123), caractérisé en ce que le crochet d'enclenchement (109) est prévu à l'extrémité radialement extérieure de la première paroi de serrage (103), en ce que la première paroi de serrage (103) et le crochet d'enclenchement (109) sont réalisés à paroi double et leurs deux parois s'appuient l'une contre l'autre, en ce que la fermeture à encliquetage (123) possède une position d'arrêt prévue en avant de la position de fermeture, dans laquelle les parois de serrage (103, 105) présentent une distance plus grande l'une de l'autre que dans la position de fermeture, et en ce que l'extrémité libre de la barrette (106) est formée par une barbe (126) qui coopère avec le crochet d'enclenchement (109) dans la position d'arrêt.

2. Collier selon la revendication 1, caractérisé en ce que l'angle formé entre la première paroi de serrage (103) et la partie adjacente du ruban de collier (102), et l'angle formé entre la seconde paroi de serrage (105) et la partie adjacente de la barrette (106) sont rigidifiés par des déformations du matériau du ruban de collier.

3. Collier selon l'une ou l'autre des revendications 1 et 2, caractérisé en ce qu'en avant de l'entaille (108) est prévue une surface oblique (117) qui facilite l'introduction du crochet d'enclenchement (109).

4. Collier selon l'une quelconque des revendications 1 à 3, caractérisé en ce que le crochet d'enclenchement (109) est réalisé sous forme d'une patte orientée sous un petit angle.

5. Collier selon l'une quelconque des revendications 1 à 4, caractérisé en ce qu'au voisinage du crochet d'enclenchement (109) est prévue une butée pour la barrette (106) dans sa position d'enclenchement.

6. Collier selon l'une quelconque des revendications 1 à 5, caractérisé en ce que le ruban de collier (102) est pourvu d'un prolongement qui commence par un coude de 180° à l'extrémité extérieure de la première paroi de serrage (103) et qui se prolonge par un coude d'environ 90° à la hauteur du pied de la paroi de serrage sous forme d'un tronçon de pontage (11 ; 111) coiffant par le dessous l'intervalle entre les parois de serrage (103, 105), et en ce que le crochet d'enclenchement (109) est formé par le tronçon d'extrémité à paroi double et limité en largeur de la première paroi de serrage (203).

7. Collier selon la revendication 6, caractérisé en ce que l'angle formé entre la première paroi de serrage (103) et la partie adjacente du ruban de collier (102) est rigidifié par un soyage (113).

8. Collier selon l'une ou l'autre des revendications 6 et 7, caractérisé en ce que l'angle formé entre la partie du prolongement parallèle à la paroi de serrage (103) et la partie adjacente du tronçon de pontage (111) est rigidifié par un soyage (114).

9. Collier selon l'une quelconque des revendications 6 à 8, caractérisé en ce que le tronçon de pontage (111) coiffe par le dessous une ondulation de compensation (104) à l'autre extrémité du ruban de collier.

10. Collier selon l'une quelconque des revendications 1 à 9, caractérisé en ce que le ruban de collier plat (22) comprend au moins deux fermetures à encliquetage (23, 24) l'une à côté de l'autre.

11. Collier selon l'une quelconque des revendications 1 à 10, caractérisé en ce que la barbe (126) est repliée au-delà de la face supérieure de la barrette (106) et jusqu'à la hauteur de la face inférieure de la barrette (106).
